# EUROPEAN PATENT SPECIFICATION

(11) **EP 2 828 997 B1**
(45) Date of publication and mention of the grant of the patent: **25.09.2019**
(21) Application number: 13721075.3
(22) Date of filing: 18.03.2013
(51) Int. Cl.: H04L 1/00

(54) **METHOD FOR GENERATING A VCM OR ACM SIGNAL HAVING AN IMPROVED FRAME**
VERFAHREN ZUR ERZEUGUNG EINES VCM- ODER ACM-SIGNALS MIT VERBESSERTEM RAHMEN
PROCÉDÉ DE GÉNÉRATION D'UN SIGNAL VCM OU ACM QUI PRÉSENTE UNE TRAME AMÉLIORÉE

(30) Priority: 19.03.2012 IT TO20120242
(43) Date of publication of application: 28.01.2015
(73) Proprietor: Rai Radiotelevisione Italiana S.p.A., 00195 Roma (IT)
(72) Inventor: MORELLO, Alberto, I-10126 Torino (TO) (IT); MIGNONE, Vittoria, I-10040 Piobesi (TO) (IT)
(74) Representative: Metroconsult Srl
(86) International application number: PCT/IB2013/052140
(87) International publication number: WO 2013/140323

(56) References cited:
- EP-A1- 1 892 866
- EP-A2- 1 168 699
- CN-A- 101 150 575
- US-A1- 2006 077 919

## Description

The present invention relates to a method for generating a VCM or ACM signal having an improved framing compared to the one required by the DVB-S2 protocol.

More in particular, the present invention relates to a method for generating a VCM or ACM signal having a framing that allows for a simpler receiver synchronization procedure, while at the same time reducing the signalling overhead.

The invention is mainly intended for, without being limited to, satellite transmission and reception of digital audio and video signals and interactive applications for domestic and professional use, including Internet access.

It is known that the DVB-S2 system has been designed on the basis of two signal framing layers:
- a first one, at the physical layer (PL), transports a small number of highly protected signalling bits;
- a second one, at the baseband layer (BB), transports a large number of signalling bits to ensure the utmost flexibility of adaptation of the input signal.

The first framing layer, i.e. the physical one, has been so conceived as to allow the modulation and coding parameters to be detected prior to demodulation and FEC decoding, and to give the possibility of synchronizing the receiver (carrier and phase retrieval, frame synchronization) in very critical signal-to-noise ratio conditions, as dictated by the high performance of FEC.

The physical layer framing of DVB-S2 is composed of a regular sequence of periodic frames called PLFRAME.

Each PLFRAME is composed of:
- a payload FECFRAME, corresponding to a coded block generated by coding the user bits in accordance with the chosen FEC scheme;
- the header of the PLFRAME, called PLHEADER, containing decoding and synchronization information, i.e.: modulation type and FEC coding rate, FECFRAME length, presence/absence of pilot symbols for facilitating receiver synchronization.

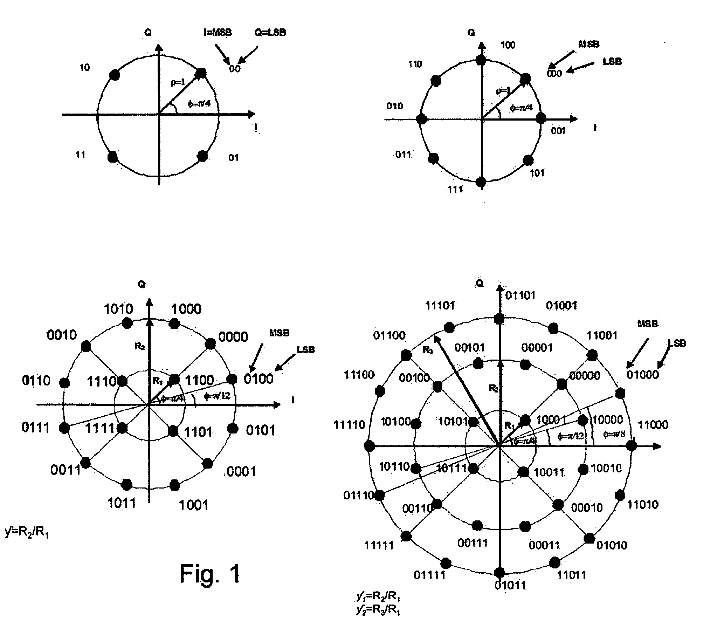

In order to protect the signals from the distortions of the transmission channel, the DVB-S2 system utilizes the LDPC (Low Density Parity Check) coding associated with the QPSK, 8PSK, 16APSK and 32APSK modulations (Figure 1), which are suitable for transmission over a non-linear channel such as the satellite one.

A description of the DVB-S2 standard and LDPC codes can be found, for example, in A. Morello, V. Mignone, "DVB-S2: The Second Generation Standard for Satellite Broad-band Services", Proceedings of the IEEE, Volume 94, Issue 1, January 2006, pp. 210 - 227.

The LDPC codes of the DVB-S2 standard are characterized by a length of the FECFRAME, or FEC block, equal to 16200 bits (short block) or 64800 bits (normal block).

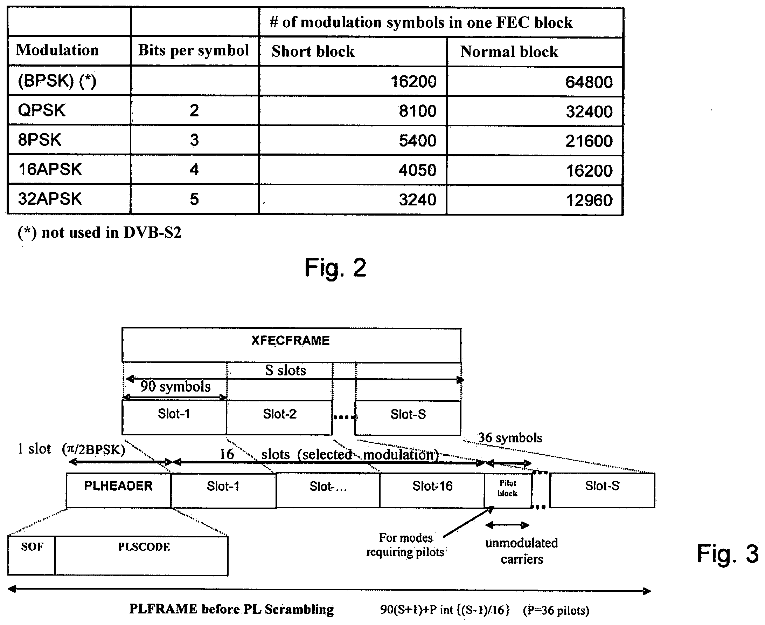

Depending on the modulation scheme in use, the FECFRAME is transformed into a symbol block XFECFRAME of different length, as shown in Figure 2.

A frame PLFRAME is generated by adding at the beginning of each frame a header PLHEADER consisting of 90 modulated symbols and possibly 36 pilot symbols after each group of 1440 symbols of the symbol block XFECFRAME. The PLHEADER contains 26 symbols (SOF) to allow identifying the beginning of the PLFRAME, and 64 further symbols (PLS-code) transporting the following information: the length of the FEC block (normal or short); the type of modulation and coding of the symbol block XFECFRAME; a signalling of presence/absence of pilot symbols to facilitate the synchronization.

The typical structure of a frame PLFRAME is shown in Figure 3.

In the CCM (Constant Coding and Modulation) applications of DVB-S2, the modulation parameters are constant throughout the duration of the transmission; hence the PLFRAME has a constant length and synchronization is simple. However, the DVB-S2 system also provides for using the VCM (Variable Coding and Modulation) and ACM (Adaptive Coding and Modulation) modes, which allow changing the modulation parameters at each PLFRAME.

The result is a sequence of frames PLFRAME having different length and hence different duration, which makes synchronization by a receiver more complex because it is necessary to decode the current PLHEADER in order to identify the position of the next PLHEADER.

This complexity is even more apparent in the evolution of the DVB-S2 system for ultra-broadband transponders (e.g. 250 or 500 MHz), where such decoding must be carried out at a very high speed.

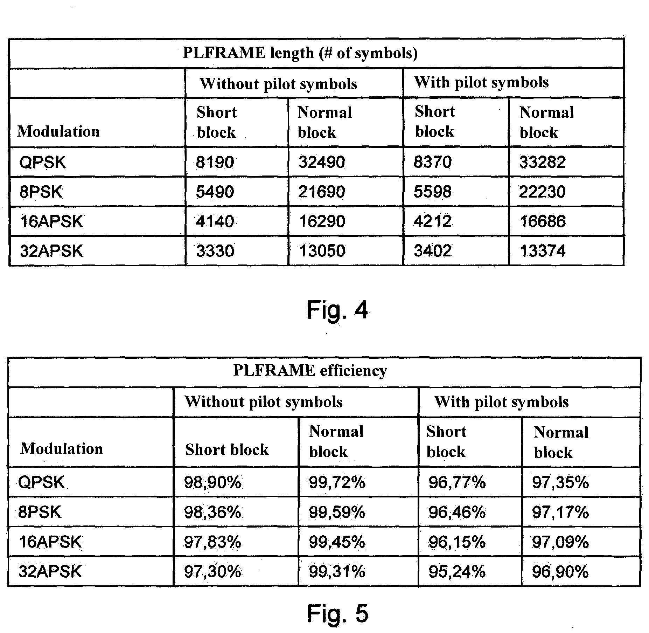

Figure 4 shows the length of the PLFRAME for the QPSK, 8PSK, 16APSK and 32APSK modulations, with or without pilot symbols, whereas Figure 5 shows the efficiency of the PLFRAME in the same configurations.

As can be seen in Figure 4, the length of the PLFRAME may have 16 possible values. The PLHEADER search algorithms must therefore consider 16 possible positions for the next PLHEADER.

EP 1 892 866 describes a transmitter including: a data modulation and channel coding unit configured to perform data modulation and channel coding for a data channel with a modulation level and a channel coding rate updated for each transmission time interval; a multiplexing unit configured to multiplex a control channel and the data channel for each transmission time interval; and an adjusting means configured to adjust a length of the transmission time interval. Increasing a unit of information transmission in the time direction and/or the frequency direction depending on communication conditions can reduce a frequency of inserting (allocating) the control channel, and can improve data transmission efficiency - see also CN 101 150 575 A (BROADCASTING SCIENT RES I OF N [CN]) 26 March 2008.

US 2006/0077919 discloses a method and system for transmitting data to a receiver over a data link in frames whose data-carrying capacity may vary from frame to frame. When data-carrying capacity is made available in a frame, the data is transmitted in one or more protocol units, each protocol unit having a data payload portion that is implicitly divided into sequentially numbered blocks each having the same fixed length, except if the number of bytes carried in the payload portion is not an integer multiple of the fixed length, then the last block, or the only block if the number of bytes in the payload portion is less than the fixed length, is shorter than the fixed length, and a header portion including the sequence number of the first block in the data payload portion. If it is determined that the receiver did not receive an uncorrupted copy of a previously transmitted protocol unit and there is insufficient data-carrying capacity in the next available frame, then the previously transmitted protocol unit is transmitted in two or more new protocol units formed from the blocks of the previously transmitted protocol unit.

EP 1168699 describes a frame coding module including a data coder having a code selection input and a downlink frame organizer connected to the data coder. The downlink frame organizer is configured to produce a fixed size downlink frame characterized by a frame length constant. A control bus couples to the code selection input. The control bus carries a first code selection signal for first payload data, and a second code selection signal for second payload data. The data coder is responsive to the code selection input to produce coded first payload data having a first coded length and coded second payload data having a second coded length. The frame organizer may then insert the coded first payload data, the coded second payload data, and overhead data in a downlink frame of size equal to the predetermined fixed downlink frame size.

It is an object of the present invention to provide a method for generating a VCM or ACM signal with improved framing which is adapted to speed up and make simpler and more robust the synchronization carried out by a receiver using said signal.

It is another object of the present invention to provide a method for generating a VCM or ACM signal with improved framing which is adapted to reduce and make constant the efficiency loss due to the PLHEADER.

It is a further object of the present invention to provide a VCM or ACM signal with improved framing which is adapted to improve the efficiency of a reception system receiving said signal.

Said objects are achieved through a method for generating a VCM or ACM signal with improved framing having the features set out in the appended claims, which are an integral part of the present description.

In brief, the method for generating a signal with improved framing in accordance with the present invention and usable with the DVB-S2 protocol provides for generating a signal with a frame PLFRAME having a constant length in terms of transmitted modulation symbols and in terms of time duration, independently of the modulation scheme adopted to transmit the symbol blocks of the LDPC code.

This is attained by creating a PLFRAME that comprises a sequence of n symbol blocks XFECFRAME while keeping the modulation and the LDPC coding rate constant, where n is the number of bits per symbol of the modulation scheme adopted to code the symbol block XFECFRAME.

The invention will now be described in detail in some of its preferred embodiments, which are provided herein by way of non-limiting example, with reference to the annexed drawings, wherein:
- Figure 1 is a schematic representation of the QPSK, 8PSK, 16APSK and 32APSK constellations included, among others, in the DVB-S2 standard;
- Figure 2 is a table that shows the length of a FEC block in a frame of a DVB-S2 signal as a function of the type of modulation in use;
- Figure 3 is a schematic representation of a PLFRAME according to the DVB-S2 standard;
- Figure 4 is a table that shows the length of a PLFRAME according to the DVB-S2 standard;
- Figure 5 is a table that shows the efficiency of the PLFRAME of Figure 4;
- Figure 6 is a table that shows the length of a PLFRAME generated in accordance with the method of the present invention;
- Figure 7 is a table that shows the efficiency of the PLFRAME of Figure 6;
- Figure 8 shows a PLFRAME which is generated in accordance with the method of the present invention as a function of the type of modulation in use.

The method for generating a signal according to the invention requires that a PLFRAME be built as a sequence of n XFECFRAME's, where n is the number of bits per symbol of the modulation, i.e. n = 1 for BPSK modulation, n = 2 for QPSK modulation, n = 3 for 8PSK modulation, n = 4 for 16APSK modulation, n = 5 for 32APSK modulation, and n = 6 for 64APSK modulation (the latter has not yet been defined in DVB-S2), preceded by a PLHEADER.

By way of example, the PLHEADER as defined by the DVB-S2 standard will be taken into account herein; of course, the scheme proposed by the invention is also applicable to any type of PLHEADER, which is to be understood as a sequence of data that precedes the transmission of a frame of modulated data, containing information useful for synchronization, demodulation and decoding purposes. In particular, the invention is applied herein to the case of a new PLHEADER which has been improved over the one of the DVB-S2 standard, and which comprises a specific bit (or a sequence of symbols, e.g. SOF multiple sequences) to indicate to the receiver that the signal being transmitted is based either on the improved framing of the present invention or on other protocols (e.g. the classic DVB-S2 protocol).

Sequences of pilot symbols may possibly be entered into the PLFRAME in order to improve the synchronization of the system.

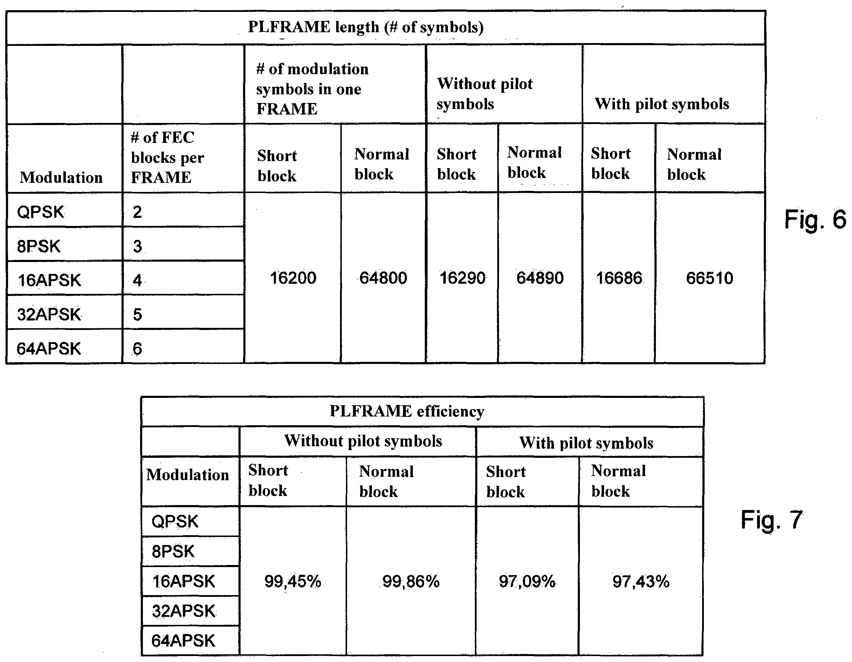

Figure 6 shows the duration of the PLFRAME generated in accordance with the method of the present invention, both in the case wherein there are no pilot symbols and in the case wherein pilot symbols having characteristics similar to those defined by the DVB-S2 standard have been entered.

As can be observed, the method of the invention advantageously allows to reduce the length of the PLFRAME's, and hence the duration thereof, to 4 possible cases (as opposed to the 16 prior-art cases), thereby allowing to simplify the reception synchronization algorithms to be used for searching for the PLHEADER.

Figure 7 shows the transmission efficiency of the PLFRAME generated in accordance with the method of the present invention. As can be inferred through a comparison with Figure 4, the method according to the invention allows to reduce the overhead of the PLHEADER, thereby significantly improving the system's transmission efficiency.

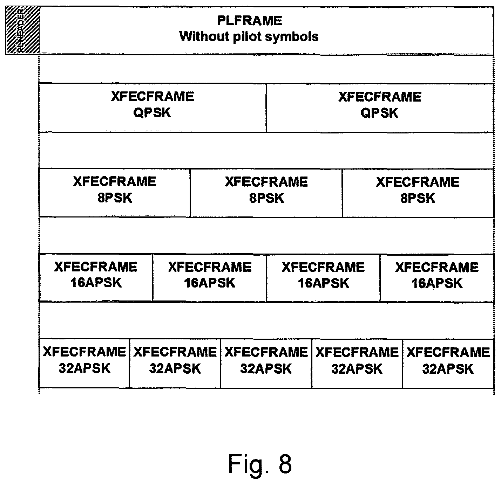

Figure 8 highlights that, regardless of the type of modulation, the method of the invention allows to generate a constant transmission framing, thus simplifying the synchronization procedures and reducing the signalling overhead.

The method according to the invention can be easily extended to different n-point constellations, which may possibly be used to form the PLFRAME by joining n FEC blocks.

The above-described method may advantageously be used in a digital signal transmission system based on the LDPC coding schemes of DVB-S2.

As is apparent to those skilled in the art, if the above-described method is applied in transmission, a reverse method will have to be applied in reception. The most important advantage, in terms of receiver synchronization procedures, is attained by keeping constant the length of the FRAME of the LDPC code (normal or short) and the configuration of the pilot symbols (present/absent) during all transmission.

It must be pointed out that the configuration flexibility of DVB-S2 is mainly due to the possibility of changing the modulation and coding parameters; therefore, keeping constant during all the transmission duration, the length of the frame of the LDPC code and the configuration of the pilot symbols will have no impact upon the system's flexibility.

In this case, unlike the DVB-S2 receiver, which must decode the current PLHEADER in order to known where the next one can be found or make multiple search attempts among 16 possible configurations, or alternatively demodulate the PLHEADER, a receiver receiving a signal according to the invention will be able to find the next PLHEADER, given the position of the current PLHEADER, because the length of the PLFRAME is fixed.

This technique is even more advantageous in the evolution of the DVB-S2 standard still under definition, in order to allow the receiver to operate at very high transmission speeds on ultra-broadband transponders. In this case, in order to know the signal framing, the receiver will simply have to identify one PLHEADER: by decoding it, it will obtain the complete framing.

The features of the present invention, as well as the advantages thereof, are apparent from the above description.

The method for generating a VCM or ACM signal with improved framing described herein by way of example may be subject to many possible variations without departing from the scope of the disclosure as defined by the appended claims; it is also clear that in the practical implementation of the invention the illustrated details may have different shapes or be replaced with other technically equivalent elements.

It can therefore be easily understood that the present invention is not limited to a method for generating a VCM or ACM signal with improved framing, but may be subject to many modifications, improvements or replacements of equivalent parts and elements without departing from the inventive idea, as clearly specified in the following claims.

## Claims

1. A method for generating a Variable Coding and Modulation, VCM, or Adaptive Coding and Modulation, ACM, signal comprising a plurality of frames (PLFRAME), each frame (PLFRAME) comprising a payload (FECFRAME) corresponding to a coded block generated by coding user bits in accordance with a chosen FEC scheme, wherein the payload (FECFRAME) is transformed into at least one symbol block (XFECFRAME) of a modulated LDPC code and wherein the length of said payload (FECFRAME) is equal to 16200 bits or 64800 bits, **characterized in that** said frame (PLFRAME) has a constant length in terms of transmitted modulation symbols and in terms of time duration and comprises a sequence of n symbol blocks (XFECFRAME), where n is the number of bits per symbol of a modulation scheme adopted by said at least one symbol block (XFECFRAME), said time length of said frame (PLFRAME) being independent of the modulation scheme adopted by said at least one symbol block (XFECFRAME).

2. A method according to claim 1, wherein n takes the value of 1 if said modulation scheme is of the BPSK type, n takes the value of 2 if said modulation scheme is of the QPSK type, n takes the value of 3 if said modulation scheme is of the 8PSK type, n takes the value of 4 if said modulation scheme is of the 16APSK type, n takes the value of 5 if said modulation scheme is of the 32APSK type, and n takes the value of 6 if said modulation scheme is of the 64APSK type.

3. A method according to one or more of claims 1 to 2, wherein said frame (PLFRAME) comprises a header (PLHEADER) which carries information about the modulation scheme and the coding of said frame (PLFRAME).

4. A method according to claim 3, wherein said information comprises a specific bit or a sequence of symbols adapted to indicate that said signal is generated in accordance with one or more of claims 1 to 2.

5. A method according to one or more of claims 1 to 4, wherein said frame (PLFRAME) comprises pilot symbols having characteristics corresponding to those defined in the DVB-S2 protocol.

6. A system adapted to generate a Variable Coding and Modulation, VCM, or Adaptive Coding and Modulation, ACM, signal in accordance with any of the claims 1 to 5.

7. A system for receiving a Variable Coding and Modulation, VCM, or Adaptive Coding and Modulation, ACM, signal generated in accordance with any of the claims 1 to 5 comprising means to reverse the signal generated by the method of any of the claims 1 to 5.

8. A Variable Coding and Modulation, VCM, or Adaptive Coding and Modulation, ACM, signal comprising a plurality of frames (PLFRAME), each frame (PLFRAME) comprising at least one symbol block (XFECFRAME) of a modulated LDPC code, said at least one symbol clock being originated by a payload (FECFRAME) corresponding to a coded block generated by coding user bits in accordance with a chosen FEC scheme, wherein the length of said payload (FECFRAME) is equal to 16200 bits or 64800 bits, **characterized in that** said frame (PLFRAME) has a constant length in terms of transmitted modulation symbols and in terms of time duration and comprises a sequence of n symbol blocks (XFECFRAME), where n is the number of bits per symbol of a modulation scheme adopted by said at least one symbol block (XFECFRAME), said time length of said frame (PLFRAME) being independent of the modulation scheme adopted by said at least one symbol block (XFECFRAME).

## Patentansprüche

1. Verfahren zum Generieren eines Variablen Kodier- und Modulations-, VCM, oder Adaptiven Kodier- und Modulations-, ACM, Signals, umfassend mehrere Frames (PLFRAME), wobei jeder Frame (PLFRAME) eine Nutzlast (FECFRAME) umfasst, die mit einem kodierten Block übereinstimmt, der durch Kodieren von Benutzerbits in Übereinstimmung mit einem gewählten FEC-Schema generiert wurde, wobei die Nutzlast in mindestens einen Symbolblock (XFECFRAME) eines modulierten LDPC-Codes transformiert wurde, und wobei die Länge der Nutzlast (FECFRAME) gleich 16200 Bits oder 64800 Bits ist, **dadurch gekennzeichnet, dass** der Frame (PLFRAME) eine konstante Länge bezüglich übertragener Modulationssymbole und bezüglich einer Zeitdauer aufweist und eine Sequenz von n Symbolblöcken (XFECFRAME) umfasst, wobei n die Anzahl von Bits pro Symbol eines Modulationsschemas ist, das von dem mindestens einen Symbolblock (XFECFRAME) übernommen wurde, wobei die Zeitlänge des Rahmens (PLFRAME) unabhängig vom Modulationsschema ist, das von dem mindestens einen Symbolblock (XFECFRAME) übernommen wurde.

2. Verfahren nach Anspruch 1, wobei n den Wert 1 annimmt, wenn das Modulationsschema vom BPSK-Typ ist, n den Wert 2 annimmt, wenn das Modulationsschema vom QPSK-Typ ist, n den Wert 3 annimmt, wenn das Modulationsschema vom 8PSK-Typ ist, n den Wert 4 annimmt, wenn das Modulationsschema vom 16APSK-Typ ist, n den Wert 5 annimmt, wenn das Modulationsschema vom 32APSK-Typ ist, und n den Wert 6 annimmt, wenn das Modulationsschema vom 64APSK-Typ ist.

3. Verfahren nach einem oder mehreren der Ansprüche 1 bis 2, wobei der Frame (PLFRAME) einen Datenkopf (PLHEADER) umfasst, der Informationen über das Modulationsschema und die Kodierung des Frames (PLFRAME) trägt.

4. Verfahren nach Anspruch 3, wobei die Informationen ein spezifisches Bit oder eine Sequenz von Symbolen umfassen, die angepasst sind, um anzuzeigen, dass das Signal in Übereinstimmung mit einem oder mehreren der Ansprüche 1 bis 2 generiert wurde.

5. Verfahren nach einem oder mehreren der Ansprüche 1 bis 4, wobei der Frame (PLFRAME) Pilotsymbole umfasst, die Charakteristiken aufweisen, die denen entsprechen, die im DVB-S2-Protokoll definiert sind.

6. System, das angepasst ist, ein Variables Kodier- und Modulations, VCM, oder Adaptives Kodier- und Modulations, ACM, Signal in Übereinstimmung mit einem der Ansprüche 1 bis 5 zu erzeugen.

7. System zum Empfangen eines Variablen Kodier- und Modulations-, VCM, oder Adaptiven Kodier- und Modulations-, ACM, Signals, das in Übereinstimmung mit einem der Ansprüche 1 bis 5 generiert ist und Mittel zum Umkehren des Signals, das durch das Verfahren nach einem der Ansprüche 1 bis 5 generiert wurde, umfasst.

8. Variables Kodier- und Modulations, VCM, oder Adaptives Kodier- und Modulations, ACM, Signal, umfassend mehrere Frames (PLFRAME), wobei jeder Frame (PLFRAME) mindestens einen Symbolblock (XFECFRAME) eines modulierten LDPC-Codes umfasst, wobei der mindestens eine Symboltakt von einer Nutzlast (FECFRAME) stammt, der mit einem kodierten Block übereinstimmt, der durch Kodieren von Benutzerbits in Übereinstimmung mit einem ausgewählten FEC-Schema generiert wurde, wobei die Länge der Nutzlast (FECFRAME) gleich 16200 Bits oder 64800 Bits ist, **dadurch gekennzeichnet, dass** der Frame (PLFRAME) eine konstante Länge bezüglich übertragener Modulationssymbole und bezüglich einer Zeitdauer aufweist und eine Sequenz von n Symbolblöcken (XFECFRAME) aufweist, wobei n die Anzahl von Bits pro Symbol eines Modulationsschemas ist, das von dem mindestens einen Symbolblock (XFECFRAME) übernommen wurde, wobei die Zeitlänge des Rahmens (PLFRAME) unabhängig vom Modulationsschema ist, das von dem mindestens einen Symbolblock (XFECFRAME) übernommen wurde.

## Revendications

1. Procédé de génération d'un signal de modulation et de codage variables, VCM, ou de modulation et de codage adaptatifs, ACM, comprenant une pluralité de trames (PLFRAME), chaque trame (PLFRAME) comprenant des données utiles (FECFRAME) correspondant à un bloc codé généré par codage de bits d'utilisateur selon un schéma FEC choisi, dans lequel les données utiles (FECFRAME) sont transformées en au moins un bloc de symbole (XFECFRAME) d'un code LDPC modulé et dans lequel la longueur desdites données utiles (FECFRAME) est égale à 16 200 bits ou 64 800 bits, **caractérisé par le fait que** ladite trame (PLFRAME) a une longueur constante en termes de symboles de modulation transmis et en termes de durée temporelle et comprend une séquence de n blocs de symbole (XFECFRAME), où n est le nombre de bits par symbole d'un schéma de modulation utilisé par ledit au moins un bloc de symbole (XFECFRAME), ladite longueur de temps de ladite trame (PLFRAME) étant indépendante du schéma de modulation utilisé par ledit au moins un bloc de symbole (XFECFRAME).

2. Procédé selon la revendication 1, dans lequel n prend la valeur de 1 si ledit schéma de modulation est du type BPSK, n prend la valeur de 2 si ledit schéma de modulation est du type QPSK, n prend la valeur de 3 si ledit schéma de modulation est du type 8PSK, n prend la valeur de 4 si ledit schéma de modulation est du type 16APSK, n prend la valeur de 5 si ledit schéma de modulation est du type 32APSK, et n prend la valeur de 6 si ledit schéma de modulation est du type 64APSK.

3. Procédé selon une ou plusieurs des revendications 1 à 2, dans lequel ladite trame (PLFRAME) comprend un en-tête (PLHEADER) qui transporte des informations concernant le schéma de modulation et le codage de ladite trame (PLFRAME).

4. Procédé selon la revendication 3, dans lequel lesdites informations comprennent un bit spécifique ou une séquence de symboles conçus pour indiquer que ledit signal est généré selon une ou plusieurs des revendications 1 à 2.

5. Procédé selon une ou plusieurs des revendications 1 à 4, dans lequel ladite trame (PLFRAME) comprend des symboles pilotes ayant des caractéristiques correspondant à celles définies dans le protocole DVB-S2.

6. Système conçu pour générer un signal de modulation et de codage variables, VCM, ou de modulation et de codage adaptatifs, ACM, selon l'une quelconque des revendications 1 à 5.

7. Système pour recevoir un signal de modulation et de codage variables, VCM, ou de modulation et de codage adaptatifs, ACM, généré selon l'une quelconque des revendications 1 à 5, comprenant des moyens pour inverser le signal généré par le procédé de l'une quelconque des revendications 1 à 5.

8. Signal de modulation et de codage variables, VCM, ou de modulation et de codage adaptatifs, ACM, comprenant une pluralité de trames (PLFRAME), chaque trame (PLFRAME) comprenant au moins un bloc de symbole (XFECFRAME) d'un code LDPC modulé, ledit au moins un bloc de symbole provenant de données utiles (FECFRAME) correspondant à un bloc codé généré par codage de bits d'utilisateur selon un schéma FEC choisi, dans lequel la longueur desdites données utiles (FECFRAME) est égale à 16 200 bits ou 64 800 bits, **caractérisé par le fait que** ladite trame (PLFRAME) a une longueur constante en termes de symboles de modulation transmis et en termes de durée temporelle et comprend une séquence de n blocs de symbole (XFECFRAME), où n est le nombre de bits par symbole d'un schéma de modulation utilisé par ledit au moins un bloc de symbole (XFECFRAME), ladite longueur de temps de ladite trame (PLFRAME) étant indépendante du schéma de modulation utilisé par ledit au moins un bloc de symbole (XFECFRAME).
